# DEMANDE DE BREVET EUROPEEN

(11) **EP 4 545 831 A1**
(43) Date de publication de la demande: **30.04.2025**
(21) Numéro de dépôt: 24196056.6
(22) Date de dépôt: 23.08.2024
(51) Int. Cl.: F16K 99/00, B01L 3/00

(54) **PROCÉDÉ DE COMMANDE D'UNE VANNE FLUIDIQUE D'UN SYSTÈME FLUIDIQUE**

(30) Priorité: 24.10.2023 FR 2311552
(71) Demandeur: Commissariat à l'Energie Atomique et aux Energies Alternatives, 75015 Paris (FR)
(72) Inventeur: DEN DULK, Remco, 38054 Grenoble cedex 09 (FR)
(74) Mandataire: INNOV-GROUP

(57) **Abrégé**

L'invention concerne un procédé de commande d'une vanne fluidique (V) d'un système fluidique, la vanne fluidique (V) comportant un canal fluidique d'entrée (11) et un canal fluidique de sortie (12), et une membrane (13) agencée entre le canal fluidique d'entrée et le canal fluidique de sortie, déformable entre deux positions distinctes, le système fluidique comprenant un dispositif d'actionnement de la membrane (13) entre ses deux positions distinctes, le dispositif d'actionnement comportant un circuit hydraulique et un circuit pneumatique, ledit circuit pneumatique étant connecté sur le circuit hydraulique.

## Description

### Domaine technique de l'invention

La présente invention se rapporte à un procédé de commande d'une vanne fluidique d'un système fluidique.

### Etat de la technique

Une vanne fluidique utilisée couramment dans une carte microfluidique comporte une membrane déformable entre deux positions pour autoriser ou bloquer le passage du fluide entre un canal d'entrée et un canal de sortie. Ce type de vanne est souvent actionné en utilisant des moyens pneumatiques connectés sur un canal de commande débouchant au niveau de la membrane. L'exercice d'une pression positive ou négative à travers ce canal de commande, permet de déformer la membrane entre ses deux positions.

Les membranes déformables utilisées au niveau des vannes microfluidiques d'une carte microfluidique sont perméables aux gaz. Leur maintien dans un état par effet pneumatique entraîne ainsi l'apparition de bulles d'air, qui peuvent ainsi se propager dans le réseau microfluidique à cause de cette perméabilité. Le risque d'injection de bulles dans le réseau microfluidique est d'autant plus important que la pression appliquée sous la membrane pour la maintenir en position est importante et que la durée de l'application de la pression est longue.

Pour résoudre ce problème, il serait possible d'utiliser des moyens de commande de type hydraulique. Cependant, ce type de commande engendre d'autres problématiques. La demande de brevet WO2014/003535 décrit un dispositif microfluidique muni d'un disque rotatif.

Le but de l'invention est de proposer un procédé de commande d'une vanne fluidique, utilisant une membrane déformable, qui puisse éviter les problèmes liés à la perméabilité aux gaz de la membrane et ainsi l'introduction de bulles d'air dans le circuit fluidique, lors d'un maintien prolongé de la membrane dans un état donné.

### Exposé de l'invention

Ce but est atteint par un procédé de commande d'une vanne fluidique d'un système fluidique, la vanne fluidique comportant un canal fluidique d'entrée et un canal fluidique de sortie, et une membrane agencée entre le canal fluidique d'entrée et le canal fluidique de sortie, déformable entre deux positions distinctes, une position d'ouverture pour autoriser un passage d'un fluide du canal fluidique d'entrée vers le canal fluidique de sortie et une position de fermeture pour bloquer le passage du fluide du canal fluidique d'entrée vers le canal fluidique de sortie, le système fluidique comprenant :
- Un dispositif d'actionnement de la membrane entre ses deux positions distinctes, le dispositif d'actionnement comportant un circuit hydraulique et un circuit pneumatique, ledit circuit pneumatique étant connecté sur le circuit hydraulique,
- Le circuit hydraulique comportant un canal d'actionnement et un canal d'amorçage, ledit canal d'amorçage comprenant une entrée et une sortie, ledit canal d'actionnement étant connecté d'un côté sur le canal d'amorçage entre son entrée et sa sortie et débouchant de l'autre côté en vis-à-vis de la membrane,
- Le circuit pneumatique comportant au moins un canal de commande comprenant une entrée destinée à être connectée à des moyens pneumatiques, suivi d'un canal de liaison qui communique avec le canal d'amorçage,
- Ledit procédé comportant des étapes de :
- Remplissage du canal d'amorçage du circuit hydraulique par son entrée à l'aide d'un liquide d'actionnement,
- Fermeture de l'entrée et de la sortie du canal d'amorçage,
- Application d'une pression dans le circuit pneumatique à l'intérieur du canal de commande pour pousser le liquide d'actionnement présent dans le canal d'amorçage vers l'intérieur du canal d'actionnement.

Selon une particularité, le procédé comporte une étape d'application d'une pression positive dans le circuit pneumatique pour pousser le liquide d'actionnement contre la membrane et la déplacer.

Selon une autre particularité, le circuit pneumatique comporte un réservoir tampon positionné sur le canal de liaison, celui-ci formant une cavité agrandie par rapport au volume du canal de commande.

Selon une autre particularité, le canal de liaison est connecté au plus près de l'entrée et/ou de la sortie du canal d'amorçage.

L'invention concerne également un système fluidique apte à mettre en oeuvre le procédé de commande tel que défini ci-dessus, le système fluidique comportant une vanne fluidique, ladite vanne fluidique comportant un canal fluidique d'entrée et un canal fluidique de sortie, et une membrane agencée entre le canal fluidique d'entrée et le canal fluidique de sortie, déformable entre deux positions distinctes, une position d'ouverture pour autoriser un passage d'un fluide du canal fluidique d'entrée vers le canal fluidique de sortie et une position de fermeture pour bloquer le passage du fluide du canal fluidique d'entrée vers le canal fluidique de sortie, le système fluidique comportant :
- Un dispositif d'actionnement de la membrane entre ses deux positions distinctes, le dispositif d'actionnement comportant un circuit hydraulique et un circuit pneumatique, ledit circuit pneumatique étant connecté sur le circuit hydraulique,
- Le circuit hydraulique comportant un canal d'actionnement et un canal d'amorçage, ledit canal d'amorçage comprenant une entrée et une sortie, ledit canal d'actionnement étant connecté d'un côté sur le canal d'amorçage entre son entrée et sa sortie et débouchant de l'autre côté en vis-à-vis de la membrane,
- Le circuit pneumatique comportant au moins un canal de commande comprenant une entrée destinée à être connectée à des moyens pneumatiques, suivi d'un canal de liaison qui communique avec le canal d'amorçage,
- Le dispositif d'actionnement comportant une unité de commande dudit circuit hydraulique et dudit circuit pneumatique, apte à mettre en oeuvre le procédé de commande tel que défini ci-dessus.

Selon une particularité, le canal de liaison est connecté au plus près de l'entrée et/ou de la sortie du canal d'amorçage.

Selon une autre particularité, le circuit pneumatique comporte un réservoir tampon positionné sur le canal de liaison, formant une cavité agrandie par rapport au volume du canal de liaison.

Selon une autre particularité, le canal de liaison comporte une résistance fluidique supérieure à celle du canal d'amorçage.

Selon une autre particularité, le canal de liaison présente une surface interne hydrophobe.

Selon une autre particularité, le canal d'actionnement comporte un volume qui est au moins 50% plus faible que celui du canal d'amorçage.

### Brève description des figures

D'autres caractéristiques et avantages vont apparaître dans la description détaillée qui suit faite en regard des dessins annexés dans lesquels :
- Les figures 1A et 1B illustrent le principe de fonctionnement d'une vanne fluidique ;
- La figure 2 montre un exemple de réalisation du système fluidique de l'invention ;
- Les figures 3A à 3C illustrent le principe de fonctionnement du système fluidique de l'invention ;
- La figure 4 représente une première variante de réalisation avantageuse de l'invention ;
- Les figures 5A et 5B montrent une deuxième variante de réalisation avantageuse de l'invention et illustrent son principe de fonctionnement ;

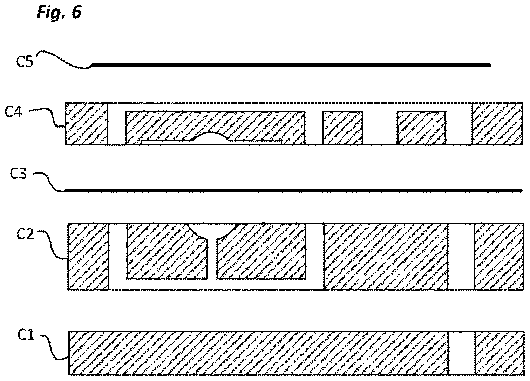

- La figure 6 illustre un principe de fabrication du système fluidique de l'invention ;

### Description détaillée d'au moins un mode de réalisation

Pour la suite de la description, on définit un repère orthonormé X, Y, Z, l'axe Z étant orienté suivant la direction verticale. Les termes "supérieur", "inférieur", "au-dessus" et "au-dessous" ou équivalents sont à comprendre en suivant l'axe Z.

### Carte microfluidique et vanne fluidique

### Figure 1A

### Figure 1B

L'invention s'applique à la commande d'une vanne fluidique V employée classiquement dans une carte microfluidique.

Une carte microfluidique est notamment employée dans le domaine médical pour analyser un fluide, tel qu'un échantillon liquide (du sang par exemple) en venant se connecter sur un automate d'analyse. La carte microfluidique peut ainsi intégrer tout un réseau microfluidique composé d'éléments microfluidiques tels que des vannes, des chambres et des canaux microfluidiques.

Une carte microfluidique peut être réalisée en une seule couche ou par l'assemblage de plusieurs couches entre elles. Ses couches sont par exemple assemblées entre elles par scellement thermique. Chaque couche peut être usinée de manière à y créer au moins une partie du réseau microfluidique de la carte, l'assemblage des couches par empilement permettant de former l'ensemble du réseau microfluidique de la carte microfluidique.

La carte microfluidique comporte deux faces opposées, s'étendant chacune dans les deux dimensions X, Y et présente une épaisseur faible (quelques mm) suivant Z au regard des deux autres dimensions.

La carte microfluidique est avantageusement réalisée dans un matériau transparent de type COP (Cyclo-Oléfine Polymère), COC (Cyclo-Oléfine Copolymère), PMMA (Polyméthacrylate de Méthyle Acrylique), PDMS (Polydiméthyl Siloxane), Silicium...

Le réseau microfluidique de la carte microfluidique peut comporter une ou plusieurs vannes fluidiques.

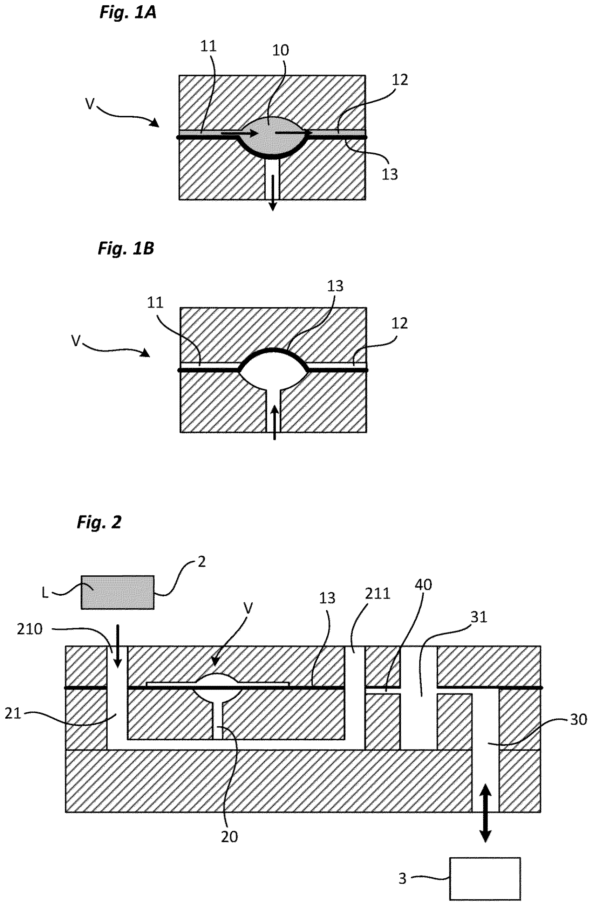

La vanne fluidique V comporte classiquement une cavité 10 dans laquelle débouche un canal fluidique d'entrée 11 et un canal fluidique de sortie 12. La vanne fluidique comporte également une membrane 13 déformable entre au moins deux positions à l'intérieur de la cavité, une position d'ouverture dans laquelle elle autorise le passage du fluide du canal fluidique d'entrée 11 vers le canal fluidique de sortie 12, à travers la cavité 10 (figure 1A), et une position de fermeture, dans laquelle elle se déploie à l'intérieur de la cavité 10 pour bloquer le passage du fluide entre le canal fluidique d'entrée 11 et le canal fluidique de sortie 12 (figure 1B). Dans sa position de fermeture, la membrane 13 est par exemple maintenue plaquée contre une paroi de la cavité, venant obturer le passage présent entre les deux canaux via la cavité.

La membrane 13 est par exemple intercalée entre deux couches de la carte microfluidique et est scellée entre ces deux couches.

Pour actionner la membrane 13 entre ses deux positions, la carte microfluidique comporte un canal d'actionnement 20 débouchant en vis-à-vis de la membrane 13. Ce canal d'actionnement 20 fait partie d'un dispositif d'actionnement du système fluidique. Dans le cadre de l'invention, le dispositif d'actionnement se compose d'un circuit hydraulique et d'un circuit pneumatique. La membrane est actionnée entre ses deux positions à l'aide d'un liquide d'actionnement et le liquide d'actionnement est déplacé à l'aide du circuit pneumatique, par application d'une pression positive ou négative dans le circuit pneumatique.

Le dispositif d'actionnement comporte une unité de commande dudit circuit hydraulique et dudit circuit pneumatique, apte à mettre en oeuvre le procédé de commande de l'invention.

### Dispositif d'actionnement

### Figure 2

Selon l'invention, le dispositif d'actionnement se compose donc d'un circuit hydraulique et d'un circuit pneumatique.

Le circuit hydraulique et le circuit pneumatique sont avantageusement intégrés dans les couches de la carte microfluidique.

Le circuit hydraulique est destiné à être rempli d'un liquide d'actionnement L, en provenance d'un réservoir 2 de liquide, et le circuit pneumatique est destiné à être rempli d'un gaz (par exemple l'air), en activant un système pneumatique 3 (compresseur par exemple).

Le circuit hydraulique comporte le canal d'actionnement 20 décrit ci-dessus, ainsi qu'un canal d'amorçage 21.

Le canal d'actionnement 20 comporte deux extrémités distinctes, une première extrémité débouchant en vis-à-vis de la membrane 13 de la vanne fluidique V et une deuxième extrémité raccordée sur le canal d'amorçage 21.

Le canal d'amorçage 21 comporte également deux extrémités distinctes, une première extrémité formant une entrée 210 pour le liquide d'actionnement et une deuxième extrémité formant une sortie 211. Le canal d'actionnement 20 est donc connecté sur le canal d'amorçage 21, entre son entrée 210 et sa sortie 211. Les termes "entrée" et "sortie" sont à considérer de manière non limitative et leur rôle peut être inversé.

De manière non limitative, l'entrée et la sortie du canal d'amorçage 21 sont accessibles depuis l'extérieur de la carte microfluidique, par exemple sur sa face supérieure, de manière à pouvoir y injecter le liquide d'actionnement L.

Le circuit pneumatique comporte pour sa part un canal de commande 30 intégré à la carte microfluidique, qui comporte également deux extrémités distinctes, une première extrémité qui communique directement avec le canal d'amorçage 21, via un canal de liaison 40, et une deuxième extrémité venant se connecter sur un système pneumatique 3. Par "communique directement", on entend que l'air injecté dans le canal de commande 30 vient au contact physique du liquide d'actionnement L présent dans le circuit hydraulique et qu'il n'existe pas de paroi intermédiaire ou de membrane spécifique, séparant les deux circuits.

Le canal de liaison 40 fait la jonction entre le canal de commande 30 et le canal d'amorçage 21 (éventuellement via un réservoir tampon 31 - voir ci-après).

Lorsque le liquide d'actionnement L est introduit dans le canal d'amorçage 21, via l'entrée de ce canal, celui-ci remplit le canal d'amorçage 21, sans pénétrer dans le canal de liaison 40.

On constate également que l'air piégé dans le canal d'actionnement 20 permet d'empêcher le liquide d'actionnement L de pénétrer dans le canal d'actionnement 20.

Lors du remplissage du canal d'amorçage 21, l'un des objectifs de l'invention est notamment que le canal 40 ne se remplisse pas de liquide d'actionnement L, puis les deux circuits sont en communication directe. Pour remplir cet objectif, différentes solutions peuvent être envisagées :
- La section du canal de liaison 40 est choisie plus petite que celle du canal d'amorçage 21. C'est ainsi que la résistance fluidique du canal 40 est plus élevée que celle du canal 21. Lors du remplissage (étape E1 - voir ci-après) du canal d'amorçage 21, le liquide d'actionnement L se dirige donc de préférence vers la sortie 211 du canal d'amorçage, et non vers le canal de liaison 40.
- Le canal 40 présente une surface interne de nature hydrophobe, ce qui renforce l'effet décrit ci-dessus.

De même, lors de l'actionnement de la vanne fluidique V entre ses deux positions, ces principes restent valables pour limiter le risque de pénétration du liquide d'actionnement L dans le canal de liaison 40. C'est notamment le cas lors de l'application d'une pression négative pour ouvrir la vanne.

Le dispositif d'actionnement comporte également l'unité de commande chargée de venir commander l'injection du liquide d'actionnement dans le circuit hydraulique et le système pneumatique pour appliquer une pression dans le circuit pneumatique.

### Fonctionnement

### Figure 3A

### Figure 3B

### Figure 3C

Le principe de fonctionnement du système est décrit ci-dessous.

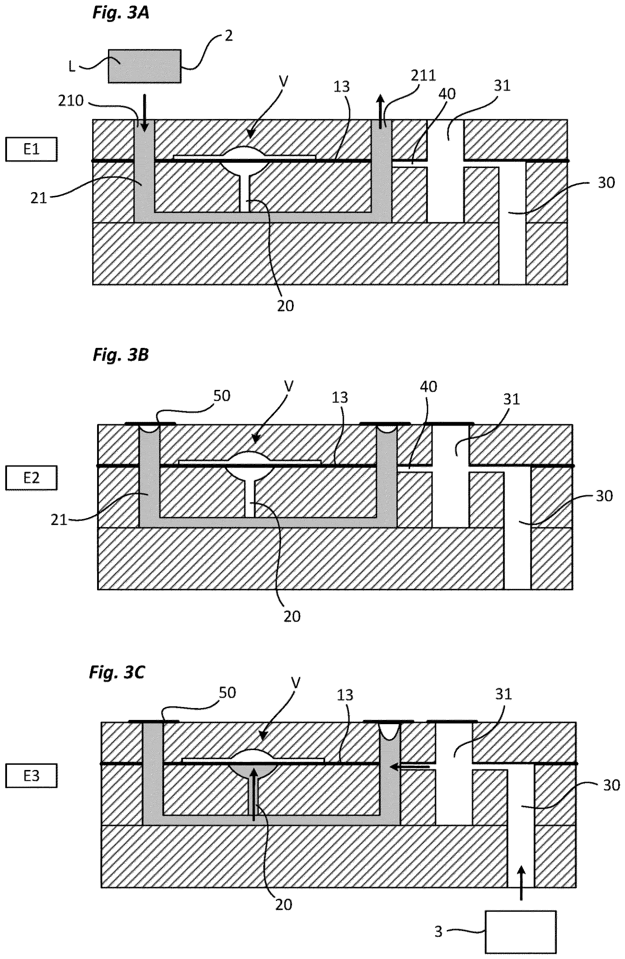

E1 - Figure 3A : Le liquide d'actionnement L est introduit dans le canal d'amorçage 21 via son entrée 210. Lorsque le liquide d'actionnement L est introduit dans le canal d'amorçage 21, celui-ci vient occuper tout le canal d'amorçage 21, sans pénétrer dans le canal de liaison 40. Le surplus de liquide injecté peut être récupéré par la sortie 211 du canal d'amorçage 21.

E2 : On vient refermer l'entrée 210 et la sortie 211 du canal d'amorçage 21, par exemple à l'aide d'adhésifs 50 collés sur la face supérieure de la carte microfluidique. Le liquide d'actionnement L occupe ainsi le canal d'amorçage 21, sans avoir pénétré le canal d'actionnement 20. Des bulles d'air résiduelles peuvent être présentes au niveau des extrémités du canal d'amorçage 21.

E3 : On vient appliquer une pression positive dans le canal de commande 30 du circuit pneumatique, à l'aide du système pneumatique 3.

En appliquant cette pression, l'air injecté pousse le liquide d'actionnement L présent dans le canal d'amorçage 21 vers l'intérieur du canal d'actionnement 20, jusqu'à ce que le liquide vienne occuper l'ensemble du canal d'actionnement 20. Une poche d'air (ménisque) peut venir se créer au niveau de l'entrée et/ou de la sortie du canal d'amorçage 21.

Le dispositif d'actionnement est ainsi prêt à l'emploi pour actionner la vanne fluidique. Pour actionner la vanne fluidique V, il suffit alors de commander le système pneumatique 3 pour que celui-ci applique une pression positive dans le canal de commande 30, afin de venir pousser le liquide d'actionnement L présent dans le canal d'actionnement 20. Mis sous pression, le liquide d'actionnement L pousse la membrane 13 et la déforme.

Il faut noter qu'il existe un intérêt à ce que le volume total du canal d'actionnement 20 soit particulièrement faible par rapport à celui du canal d'amorçage 21. Ainsi, le temps nécessaire pour mettre en oeuvre cette étape E3 est court et la perte de liquide présent dans le canal d'amorçage 21 pour remplir le canal d'actionnement 20 est faible. De plus, la présence d'un faible volume au niveau du canal d'actionnement 20 présente un avantage important lors d'un actionnement en pression négative pour ouvrir la vanne fluidique V. Le déplacement du liquide reste ainsi faible par rapport au volume total du liquide d'actionnement L présent dans le canal d'amorçage 21. Si ce volume déplacé était plus important, il y aurait plus de risque que le liquide soit aspiré dans le canal de liaison 40.

A titre d'exemple, le volume du canal d'actionnement 20 est au moins 50% plus faible que celui du canal d'amorçage 21, par exemple 75% plus faible que celui du canal d'amorçage 21.

### Variantes de réalisation

### Figure 4

### Figure 5A

### Figure 5B

Selon une particularité, le canal de liaison 40 est agencé de manière à déboucher le plus proche possible de la sortie du canal d'amorçage 21, ceci de manière à éviter que le liquide d'actionnement L ne s'échappe par gravité et/ou capillarité.

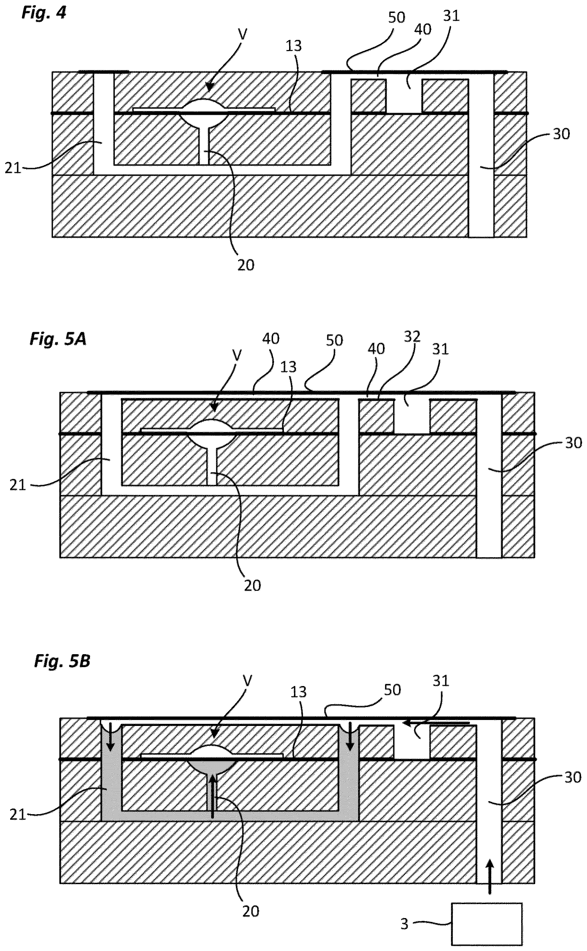

De manière préférentielle, le canal de liaison 40 est directement connecté sur la sortie 211 du canal d'amorçage 21 (figure 4).

De manière avantageuse, le canal de liaison 40 est directement connecté sur la sortie 211 du canal d'amorçage 21 mais également sur l'entrée 210 du canal d'amorçage 21 (figure 5A). De cette manière lors de l'application de la pression positive à l'intérieur du canal de commande 30, l'air vient pousser le liquide d'actionnement L en parallèle par l'entrée 210 du canal d'amorçage 21 et par la sortie 211 du canal d'amorçage 21, pour le pousser vers l'intérieur du canal d'actionnement 20 (figure 5B).

Dans ces deux dernières configurations, le canal de liaison 40 est réalisé par une cavité creusée sur la face supérieure de la carte microfluidique pour relier le canal de commande 30 à l'entrée et à la sortie du canal d'amorçage 21. Lors de l'étape E2 ci-dessus, on vient alors refermer entièrement ladite cavité par le dessus, de manière à assurer une communication étanche entre le canal de commande 30 et le canal d'amorçage 21.

De manière avantageuse, le circuit pneumatique comporte un réservoir tampon 31 positionné sur le canal de liaison 40 et utilisé pour stocker tout surplus de liquide d'actionnement qui viendrait refluer en provenance du circuit hydraulique, et ainsi éviter de venir endommager le système pneumatique connecté sur le canal de commande 30.

De manière avantageuse, la paroi interne du canal de liaison 40 peut être revêtue, au moins en partie, d'un composé hydrophobe 32, notamment dans sa portion débouchant dans le canal d'amorçage 21, ceci afin de limiter tout reflux de liquide d'actionnement L vers le système pneumatique 3. Il faut noter qu'un matériau comme le COC est de base plutôt hydrophobe.

Il faut noter qu'il est également avantageux de laisser une bulle d'air résiduelle au niveau de la connexion du canal de liaison 40 sur le canal d'amorçage 21, en vue de limiter tout reflux de liquide. Le canal de liaison 40 aura avantageusement une section transversale réduite, pour éviter un reflux de liquide par capillarité.

Selon une variante de réalisation, l'entrée 210 et/ou la sortie 211 du canal d'amorçage 21 peuvent être arrangées pour déboucher sur la face inférieure de la carte microfluidique 1.

### Fabrication

### Figure 6

La carte microfluidique est par exemple réalisée par l'assemblage de plusieurs couches scellées entre elles.

De manière non limitative, on a par exemple :
- Une première couche C1 inférieure qui comporte un trou traversant pour l'entrée du canal de commande 30 ;
- Une deuxième couche C2 empilée sur la première couche, qui comporte des empreintes pour former le canal d'amorçage 21, le canal d'actionnement 20, et une portion du canal de commande 30.
- Une troisième couche C3 empilée sur la deuxième couche, constituée de la membrane déformable 13. La membrane 13 peut être découpée sur certaines zones ciblées qui correspondent à des passages fluidiques.
- Une quatrième couche C4 empilée sur la troisième couche, comprenant le réseau microfluidique, notamment la vanne fluidique V, et les portions du canal d'amorçage 21 formant son entrée et sa sortie, ainsi que le canal de commande 30, le réservoir tampon 31 et la cavité formant le canal de liaison 40 reliant le canal de commande 30 à l'entrée et la sortie du canal d'amorçage 21.
- Une dernière couche supérieure C5, formée par un ou plusieurs adhésifs 50 venant fermer ladite cavité par le dessus.

Lors de la fabrication, on notera qu'il est pertinent que :
- Le canal d'actionnement 20 dispose d'un volume faible, pour avoir peu de volume de liquide à déplacer lors de l'actionnement de la vanne fluidique V ;
- Le canal de liaison 40 dispose également d'un faible volume, pour augmenter sa résistance fluidique et limiter tout reflux de liquide vers le canal de commande 30 ;

L'invention présente ainsi de nombreux avantages, parmi lesquels :
- Une solution qui permet de s'affranchir des problèmes de perméabilité aux gaz des membranes, en proposant un actionnement par un circuit hydraulique ;
- Une solution qui permet de gérer le remplissage du circuit hydraulique, en limitant l'apparition de bulles d'air ;
- Une solution dotée de moyens évitant le reflux de liquide vers le circuit pneumatique, alors même que le circuit hydraulique et le circuit pneumatique sont en communication directe ;

## Revendications

1. Procédé de commande d'une vanne fluidique (V) d'un système fluidique, la vanne fluidique (V) comportant un canal fluidique d'entrée (11) et un canal fluidique de sortie (12), et une membrane (13) agencée entre le canal fluidique d'entrée et le canal fluidique de sortie, déformable entre deux positions distinctes, une position d'ouverture pour autoriser un passage d'un fluide du canal fluidique d'entrée vers le canal fluidique de sortie et une position de fermeture pour bloquer le passage du fluide du canal fluidique d'entrée vers le canal fluidique de sortie, le système fluidique comprenant :
- Un dispositif d'actionnement de la membrane (13) entre ses deux positions distinctes, le dispositif d'actionnement comportant un circuit hydraulique et un circuit pneumatique, ledit circuit pneumatique étant connecté sur le circuit hydraulique,
- Le circuit hydraulique comportant un canal d'actionnement (20) et un canal d'amorçage (21), ledit canal d'amorçage (21) comprenant une entrée (210) et une sortie (211), ledit canal d'actionnement (20) étant connecté d'un côté sur le canal d'amorçage entre son entrée et sa sortie et débouchant de l'autre côté en vis-à-vis de la membrane (13),
- Le circuit pneumatique comportant au moins un canal de commande (30) comprenant une entrée destinée à être connectée à des moyens pneumatiques, suivi d'un canal de liaison (40) qui communique avec le canal d'amorçage (21),
- Ledit procédé étant **caractérisé en ce qu'**il comporte des étapes de :
- Remplissage du canal d'amorçage (21) du circuit hydraulique par son entrée à l'aide d'un liquide d'actionnement (L),
- Fermeture de l'entrée et de la sortie du canal d'amorçage (21),
- Application d'une pression dans le circuit pneumatique à l'intérieur du canal de commande (30) pour pousser le liquide d'actionnement (L) présent dans le canal d'amorçage (21) vers l'intérieur du canal d'actionnement (20).

2. Procédé selon la revendication 1, **caractérisé en ce qu'**il comporte une étape d'application d'une pression positive dans le circuit pneumatique pour pousser le liquide d'actionnement (L) contre la membrane (13) et la déplacer.

3. Procédé selon la revendication 1 ou 2, **caractérisé en ce que** le circuit pneumatique comporte un réservoir tampon (31) positionné sur le canal de liaison (40) et qui forme une cavité agrandie par rapport au volume du canal de commande.

4. Procédé selon l'une des revendications 1 à 3, **caractérisé en ce que** le canal de liaison (40) est connecté au plus près de l'entrée et/ou de la sortie du canal d'amorçage (21).

5. Système fluidique comportant une vanne fluidique (V), ladite vanne fluidique comportant un canal fluidique d'entrée (11) et un canal fluidique de sortie (12), et une membrane (13) agencée entre le canal fluidique d'entrée et le canal fluidique de sortie, déformable entre deux positions distinctes, une position d'ouverture pour autoriser un passage d'un fluide du canal fluidique d'entrée vers le canal fluidique de sortie et une position de fermeture pour bloquer le passage du fluide du canal fluidique d'entrée vers le canal fluidique de sortie, **caractérisé en ce que** le système fluidique comporte :
- Un dispositif d'actionnement de la membrane (13) entre ses deux positions distinctes, le dispositif d'actionnement comportant un circuit hydraulique et un circuit pneumatique, ledit circuit pneumatique étant connecté sur le circuit hydraulique,
- Le circuit hydraulique comportant un canal d'actionnement (20) et un canal d'amorçage (21), ledit canal d'amorçage (21) comprenant une entrée (210) et une sortie (211), ledit canal d'actionnement (20) étant connecté d'un côté sur le canal d'amorçage entre son entrée et sa sortie et débouchant de l'autre côté en vis-à-vis de la membrane (13),
- Le circuit pneumatique comportant au moins un canal de commande (30) comprenant une entrée destinée à être connectée à des moyens pneumatiques, suivi d'un canal de liaison qui communique avec le canal d'amorçage (21),
- Le dispositif d'actionnement comportant une unité de commande dudit circuit hydraulique et dudit circuit pneumatique, apte à mettre en oeuvre le procédé de commande tel que défini dans l'une des revendications 1 à 4.

6. Système selon la revendication 5, **caractérisé en ce que** le canal de liaison (40) est connecté au plus près de l'entrée et/ou de la sortie du canal d'amorçage (21).

7. Système selon la revendication 5 ou 6, **caractérisé en ce que** le circuit pneumatique comporte un réservoir tampon (31) positionné sur le canal de liaison (40) et qui forme une cavité agrandie par rapport au volume du canal de commande.

8. Système selon l'une des revendications 5 à 7, **caractérisé en ce que** le canal de liaison (40) comporte une résistance fluidique supérieure à celle du canal d'amorçage (21).

9. Système selon l'une des revendications 5 à 8, **caractérisé en ce que** le canal de liaison (40) présente une surface interne hydrophobe.

10. Système selon l'une des revendications 5 à 9, **caractérisé en ce que** le canal d'actionnement (20) comporte un volume qui est au moins 50% plus faible que celui du canal d'amorçage (21).
